# FASCICULE DE BREVET EUROPEEN

(11) **EP 3 727 944 B1**
(45) Date de publication et mention de la délivrance du brevet: **14.02.2024**
(21) Numéro de dépôt: 18827102.7
(22) Date de dépôt: 21.12.2018
(51) Int. Cl.: B60R 16/023

(54) **PIÈCE DE CONDUCTION ÉLECTRIQUE POUR ENSEMBLE ÉLECTRIQUE**
ELEKTRISCH LEITENDES TEIL FÜR EINE ELEKTRISCHE ANORDNUNG
ELECTRICALLY CONDUCTIVE PART FOR AN ELECTRICAL ASSEMBLY

(30) Priorité: 22.12.2017 FR 1762955
(43) Date de publication de la demande: 28.10.2020
(73) Titulaire: Valeo eAutomotive France SAS, 95800 Cergy (FR)
(72) Inventeur: TRAMET, Guillaume, 78920 ECQUEVILLY (FR); LESCOT, Hubert, 92430 MARNES LA COQUETTE (FR); BEAUDOUX, Benoît, 75013 PARIS (FR); DENIOT, Roger, 78300 POISSY (FR)
(74) Mandataire: Valeo Powertrain Systems
(86) Numéro de dépôt international: PCT/EP2018/086474
(87) Numéro de publication internationale: WO 2019/122286

(56) Documents cités:
- EP-A1- 1 870 969
- EP-A2- 2 571 119
- DE-T5-112015 002 668
- US-A1- 2012 115 340
- US-A1- 2013 069 493

## Description

### DOMAINE TECHNIQUE ET OBJET DE L'INVENTION

La présente invention se rapporte au domaine des équipements électriques pour véhicules électriques ou hybrides et concerne plus particulièrement une pièce de conduction électrique pour un ensemble électrique ainsi qu'un ensemble électrique comprenant au moins une telle pièce.

L'invention vise notamment à permettre une mesure de l'intensité du courant ou des variations de l'intensité du courant circulant dans une borne électrique d'un ensemble électrique d'un véhicule électrique ou hybride.

### ETAT DE LA TECHNIQUE

Comme cela est connu, un véhicule automobile électrique ou hybride comprend un système de motorisation électrique alimenté par une batterie d'alimentation haute tension via un réseau électrique embarqué haute tension et une pluralité d'équipements électriques auxiliaires alimentés par une batterie d'alimentation basse tension via un réseau électrique embarqué basse tension.

La batterie d'alimentation haute tension assure une fonction d'alimentation en énergie du système de motorisation électrique permettant la propulsion du véhicule. Plus précisément, afin de commander le moteur électrique entrainant les roues du véhicule, il est connu d'utiliser un onduleur permettant de convertir le courant continu fourni par la batterie d'alimentation haute tension en un ou plusieurs courants de commande alternatifs, par exemple sinusoïdaux.

Dans une solution connue, l'onduleur se présente sous la forme d'un boitier dans lequel sont montés un module électronique de puissance et une unité électronique de contrôle. Le module électronique de puissance comprend un corps comportant des composants électriques par lesquels passe l'énergie alimentant le moteur électrique. L'unité électronique de contrôle comprend des composants électroniques permettant de contrôler les composants électriques du module électronique de puissance.

Dans le cas d'un moteur triphasé, le module électronique de puissance comprend trois connecteurs électriques, dits « connecteurs de phase », permettant de commander le moteur en utilisant trois courants dits « de phase » déphasés deux à deux, par exemple de 120°. Ces courants de phase sont générés par l'onduleur à partir du courant délivré par la batterie haute tension. Pour ce faire, le module électronique de puissance comprend un premier connecteur de batterie, dit « connecteur positif », adapté pour être relié à un potentiel positif de la batterie, et un deuxième connecteur de batterie, dit « connecteur négatif », adapté pour être relié à un potentiel négatif de la batterie d'alimentation haute tension.

L'unité électronique de contrôle commande le module électronique de puissance afin qu'il réalise la conversion du courant continu reçu de la batterie haute tension, définissant une tension continue entre le connecteur positif et le connecteur négatif, en trois courants de phase alternatifs de commande du moteur.

A cette fin, l'unité électronique de contrôle se présente sous la forme d'une carte électronique sur laquelle sont montés des composants électroniques reliés par des pistes électriques et permettant de commander le module électronique de puissance.

Afin de contrôler le fonctionnement de l'onduleur, il peut être nécessaire de mesurer les variations de l'intensité des courants de phase circulant dans les connecteurs de phase ou dans les connecteurs de batterie. Il existe donc le besoin d'une solution simple, fiable et efficace permettant de mesurer ces variations.

Une pièce de conduction électrique selon le préambule de la revendication 1 est décrit dans EP1870969.

### PRESENTATION GENERALE DE L'INVENTION

A cet effet, l'invention concerne tout d'abord une pièce de conduction électrique pour un ensemble électrique, ledit ensemble comprenant un module électronique de puissance et une unité électronique de contrôle dudit module électronique de puissance, ledit module électronique de puissance comportant au moins une borne électrique externe. Ladite pièce est remarquable en ce qu'elle est destinée à relier électriquement ladite au moins une borne électrique externe à l'unité électronique de contrôle et en ce qu'elle comprend une portion plane conductrice électriquement, destinée à être connectée électriquement avec la au moins une borne électrique externe, et au moins une broche de connexion électrique s'étendant depuis un bord de la portion plane et comprenant une extrémité de liaison reliée à la portion plane, au moins une portion intermédiaire et au moins une extrémité libre reliée à ladite extrémité de liaison par ladite au moins une portion intermédiaire, ladite au moins une extrémité libre étant adaptée pour être connectée électriquement à l'unité électronique de contrôle, notamment en la soudant au niveau d'une piste d'un circuit électrique de l'unité électronique de contrôle.

En venant directement en contact avec une surface électriquement conductrice de l'unité électronique de contrôle, la pièce permet de réaliser une mesure de l'intensité du courant ou des variations de l'intensité du courant circulant dans la au moins une borne électrique externe.

L'ensemble électrique peut par exemple être un onduleur.

Selon une caractéristique de l'invention, la au moins une broche de connexion électrique est issue de matière de la portion plane de sorte que la pièce de conduction électrique soit aisée à fabriquer.

Selon un aspect de l'invention, la portion plane délimite une ouverture apte à autoriser le passage d'un organe de fixation de la pièce de conduction électrique sur une borne électrique externe du module électronique de puissance.

Selon l'invention, la au moins une extrémité libre s'étend orthogonalement au plan de la portion plane.

De préférence, la broche de connexion électrique comprend deux extrémités libres permettant, lorsque la pièce est reliée électriquement à l'unité électronique de contrôle, de remplir une fonction d'anti-rotation de la pièce. Cette fonction est particulièrement utile lors du montage de la pièce sur l'unité électronique de contrôle afin d'éviter d'endommager la connexion électrique entre la pièce et l'unité électronique de contrôle.

De préférence encore, la au moins une portion intermédiaire de la broche de connexion électrique est au moins en partie courbée afin de permettre à la au moins une extrémité libre de venir en contact avec une surface de connexion électrique de l'unité électronique de contrôle.

Avantageusement, la pièce comprend une pluralité de portions s'étendant obliquement, de préférence orthogonalement, au plan de la portion plane afin d'améliorer l'hyperstatisme de la pièce et réduire les dommages éventuels causés par des vibrations sur la pièce.

Selon un aspect avantageux de l'invention, la pièce comprend en outre des portions de maintien sur un support de montage de ladite pièce sur l'unité électronique de contrôle afin de faciliter le montage de la pièce sur l'unité électronique de contrôle.

De manière préférée, les portions de maintien se présentent sous la forme de deux pattes de maintien recourbées s'étendant depuis le bord opposé au bord depuis lequel s'étend la broche de connexion électrique, de telles pattes de maintien permettant de maintenir efficacement et de manière fiable la position de la pièce par rapport au support de montage, notamment lors de son passage dans un four de soudage.

De préférence, les portions de maintien sont issues de matière de la portion plane de sorte que la pièce de conduction électrique soit aisée à fabriquer.

Selon un autre aspect avantageux de l'invention, la pièce comprend en outre au moins une portion de blocage sur un support de montage de ladite pièce sur l'unité électronique de contrôle.

De préférence, la au moins une portion de blocage s'étend depuis le bord opposé au bord depuis lequel s'étend la au moins une broche de connexion électrique.

Avantageusement, la au moins une portion de blocage se présente sous la forme d'un ergot de blocage, un tel ergot de blocage empêchant à la pièce de se déplacer latéralement lors de son montage sur l'unité électronique de contrôle.

De préférence, la au moins une portion de blocage est issue de matière de la portion plane de sorte que la pièce de conduction électrique soit aisée à fabriquer.

De manière avantageuse, l'épaisseur de la portion plane est inférieure à 1,5 mm, de préférence de l'ordre de 1 mm, ce qui permet notamment de former aisément la au moins une broche de connexion, les portions de maintien et les portions de blocage lors de la fabrication de la pièce.

Selon une caractéristique de l'invention, la pièce est métallique afin qu'elle soit aisée à fabriquer et conduise facilement le courant.

De préférence, la pièce est réalisée en cuivre, en acier ou en aluminium, qui sont des métaux présentant une conduction élevée et qui sont aisés à manipuler lors de la fabrication.

Selon une autre caractéristique de l'invention, la pièce est recouverte d'une surface anti-usure, de préférence composée d'étain et de nickel. Un tel traitement améliore le contact électrique, limite la corrosion du contact électrique et améliore la compatibilité des matériaux (entre l'organe de fixation, la pièce et la borne électrique externe correspondant).

L'invention concerne également un ensemble électrique, notamment pour véhicule automobile électrique ou hybride, ledit ensemble électrique comprenant un module électronique de puissance et une unité électronique de contrôle, ledit module électronique de puissance comportant au moins une borne électrique externe. Ledit ensemble électrique est remarquable en ce qu'il comprend au moins une pièce de conduction électrique, telle que présentée précédemment, fixée sur ladite au moins une borne électrique externe et reliée électriquement à l'unité électronique de contrôle.

L'ensemble électrique peut par exemple être un onduleur.

Selon un aspect de l'invention, la pièce de conduction électrique est montée sur la borne électrique externe par l'intermédiaire d'un organe de fixation traversant une ouverture formée dans la portion plane de la pièce de conduction électrique de manière à relier électriquement la pièce de conduction électrique et la borne électrique externe du module électronique de puissance.

Avantageusement, l'ensemble électrique comprend en outre au moins un connecteur électrique destiné à connecter le module électronique de puissance avec un élément électrique externe, par exemple une machine électrique ou une batterie, ledit au moins un connecteur électrique étant connecté électriquement à ladite au moins une borne électrique externe.

Notamment, le connecteur électrique peut être un connecteur électrique de phase d'une machine électrique ou bien un connecteur électrique d'un port d'une batterie électrique.

De manière avantageuse, la borne électrique externe, la portion plane de la pièce de conduction électrique et le connecteur électrique correspondant sont superposés et en contact.

Selon un aspect de l'invention, la portion plane est disposée entre la borne électrique externe et le connecteur électrique correspondant.

L'invention concerne aussi un véhicule électrique ou hybride comprenant une machine électrique, par exemple une machine de motorisation, alimentée par une batterie d'alimentation haute tension via un réseau électrique embarqué haute tension et un ensemble électrique, par exemple un onduleur, tel que présenté précédemment connecté à ladite machine électrique.

L'invention concerne enfin un procédé de montage d'au moins une pièce de conduction électrique sur une unité électronique de contrôle pour un ensemble électrique, ledit procédé comprenant une étape de positionnement d'un support de montage comprenant une unité électronique de contrôle, une étape de positionnement d'au moins une pièce de conduction électrique, telle que présentée précédemment, sur le support de montage de sorte que la au moins une extrémité libre de la broche de connexion électrique soit logée dans au moins un orifice formé dans l'unité électronique de contrôle, une étape d'application d'un matériau de soudage au niveau du au moins un orifice et de la au moins une extrémité libre de la broche de connexion électrique, et une étape de passage dans un four du support de montage, sur lequel sont positionnés l'unité électronique de contrôle et la au moins une pièce de conduction électrique de manière à souder ladite au moins pièce de conduction électrique sur l'unité électronique de contrôle au niveau de la au moins une extrémité libre de la au moins une broche de connexion électrique.

De préférence, le procédé comprend en outre une étape de découpage de l'unité électronique de contrôle sur laquelle est soudée la au moins une pièce de conduction électrique afin de la désolidariser du support de montage.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
- la figure 1 est une vue en perspective d'une forme de réalisation d'un onduleur selon l'invention,
- la figure 2 est une vue partielle en perspective de l'onduleur de la figure 1,
- la figure 3 est une vue en perspective d'une forme de réalisation de la pièce électriquement conductrice selon l'invention,
- la figure 4 est une autre vue en perspective de la pièce électriquement conductrice de la figure 3,
- la figure 5 est une vue de côté de la pièce électriquement conductrice de la figure 3,
- la figure 6 est une vue en perspective d'un support de montage sur lequel est positionnée l'unité électronique de contrôle de l'onduleur des figures 1 et 2, sur laquelle sont montés trois pièces électriquement conductrices telles qu'illustrées sur les figures 3 à 5,
- la figure 7 est une vue partielle de côté de l'unité électronique de contrôle de la figure 6 montrant le positionnement de l'une des pièces électriquement conductrices sur l'unité électronique de contrôle,
- la figure 8 est une vue partielle en perspective de l'unité électronique de contrôle de la figure 6,
- la figure 9 est une vue de côté partielle de l'onduleur de la figure 2, où notamment l'unité électronique de contrôle 20 est représenté en partie en transparence.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

Dans la description qui sera faite ci-après, l'invention sera décrite dans son application à un véhicule automobile électrique ou hybride sans que cela ne soit limitatif de la portée de la présente invention.

Dans l'exemple décrit ci-après, le véhicule comprend notamment une machine électrique, un ensemble électrique se présentant sous la forme d'un onduleur, une batterie d'alimentation haute tension, un réseau électrique embarqué haute tension, une batterie d'alimentation basse tension, un réseau électrique embarqué basse tension et une pluralité d'équipements électriques auxiliaires.

L'ensemble électrique selon l'invention est décrit ci-après dans sa mise en oeuvre pour un onduleur. On notera cependant que l'ensemble électrique pourrait être autre chose qu'un onduleur, par exemple un chargeur ou un convertisseur DCDC embarqués dans le véhicule, sans que cela ne limite la portée de la présente invention.

Le réseau électrique embarqué basse tension relie la batterie d'alimentation basse tension et la pluralité d'équipements électriques auxiliaires afin que la batterie d'alimentation basse tension alimente lesdits équipements électriques auxiliaires, tels que des calculateurs embarqués, des moteurs de lève-vitres, un système multimédia, etc. La batterie d'alimentation basse tension délivre typiquement par exemple une tension de l'ordre de 12 V, 24 V ou 48 V. La recharge de la batterie basse tension est réalisée à partir de la batterie haute tension via un convertisseur de tension continue en tension continue, appelé communément convertisseur continu-continu.

Le réseau électrique embarqué haute tension relie la batterie d'alimentation haute tension et l'onduleur afin que la batterie d'alimentation haute tension assure une fonction d'alimentation en énergie de la machine électrique via l'onduleur. La batterie d'alimentation haute tension délivre typiquement une tension comprise entre 100 V et 900 V, de préférence entre 100 V et 500 V. La recharge en énergie électrique de la batterie d'alimentation haute tension est réalisée en la connectant, via le réseau électrique haute tension continue du véhicule, à un réseau électrique externe, par exemple le réseau électrique alternatif domestique.

La machine électrique est une machine électrique tournante, de préférence destinée à entrainer les roues du véhicule à partir de l'énergie fournie par la batterie d'alimentation haute-tension. Plus précisément, la machine électrique est une machine électrique à courant alternatif alimentée par une source de courants polyphasés. Par exemple, la machine électrique peut être un moteur à courant alternatif. Dans l'exemple préféré décrit ci-après, la machine électrique est alimentée par une source de courants triphasés sans que cela ne soit limitatif de la portée de la présente invention.

Dans cet exemple, la commande de la machine électrique est réalisée au moyen de l'onduleur. Ledit onduleur permet de convertir le courant continu fourni par la batterie d'alimentation haute tension en trois courants de commande alternatifs, par exemple sinusoïdaux. Autrement dit, l'onduleur a pour fonction de transformer le courant continu délivré en entrée par la batterie d'alimentation haute tension en trois courants de phase permettant de commander la machine électrique. A l'inverse, dans un autre mode de fonctionnement, la machine électrique peut également fournir trois courants alternatifs à l'onduleur afin que ledit onduleur les transforme en un courant continu permettant de charger la batterie d'alimentation haute-tension.

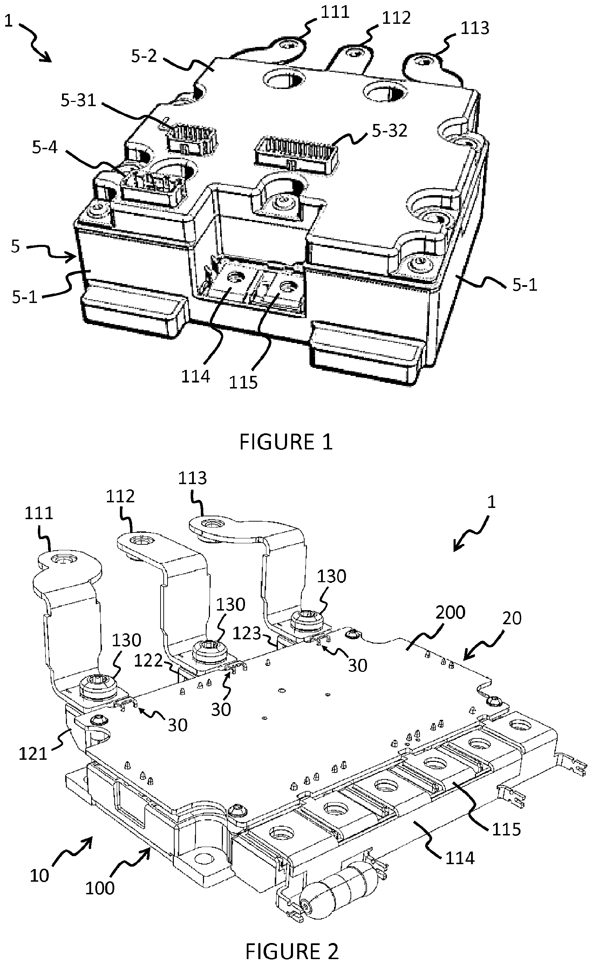

Dans l'exemple illustré à la figure 1, l'onduleur 1 comprend un boitier 5 dans lequel sont montés, en référence à la figure 2, un module électronique de puissance 10 et une unité électronique de contrôle 20.

Comme illustré sur la figure 1, le boitier 5 comprend une paroi inférieure (non visible sur la figure 1), des parois latérales 5-1 et un couvercle 5-2. Le module électronique de puissance 10 peut par exemple être supporté par une première paroi du boiter 5, qui forme notamment un fond (non visible) dudit boitier 5.

Dans l'exemple illustré à la figure 1, l'onduleur 1 comprend de manière non limitative deux connecteurs de signaux 5-31, 5-32 et un connecteur d'alimentation 5-4, montés sur le couvercle 5-2 du boitier 5. Les connecteurs de signaux 5-31, 5-32 sont destinés à permettre un échange de signaux de données entre les composants de l'onduleur 1 et l'extérieur de l'onduleur 1, par exemple avec un contrôleur du véhicule. En particulier, ces connecteurs de signaux 5-31, 5-32 peuvent être connectés à l'unité électronique de contrôle 20. Le connecteur d'alimentation 5-4, est destiné à connecter l'onduleur 1 à un câble d'alimentation électrique, par exemple relié au réseau électrique embarqué basse tension, afin de permettre l'alimentation électrique de l'unité électronique de contrôle 20.

En référence aux figures 1 et 2, le module électronique de puissance 10 comprend un corps 100 et une pluralité de connecteurs électriques 111, 112, 113, 114, 115. Plus précisément, dans cet exemple, le module électronique de puissance 10 comprend deux connecteurs de batterie 114, 115, destinés à connecter électriquement l'onduleur 1 à la batterie d'alimentation haute tension, et trois connecteurs de phase 111, 112, 113 destinés à connecter électriquement l'onduleur 1 à la machine électrique.

Notamment, chaque connecteur de phase 111, 112, 113 permet de connecter électriquement une phase de la machine électrique commandée par l'onduleur avec le module électronique de puissance 10. On notera que l'onduleur 1 pourrait comprendre un nombre de connecteurs de phase 111, 112, 113 différent, notamment un nombre fonction du nombre de phases de la machine électrique commandée par l'onduleur 1.

Dans l'exemple illustré à la figure 2, l'onduleur 1 comprend un premier connecteur de batterie, adapté pour être relié au potentiel négatif de la batterie d'alimentation haute tension, appelé connecteur négatif 114, et un deuxième connecteur de batterie adapté pour être relié au potentiel positif de la batterie d'alimentation haute tension, appelé connecteur positif 115. On notera en variante que le premier connecteur 114 pourrait être relié au potentiel positif de la batterie d'alimentation haute tension et que le deuxième connecteur 115 pourrait être relié au potentiel négatif de la batterie d'alimentation haute tension.

Par ailleurs, le module électronique de puissance 10 comprend des composants par lesquels passe l'énergie alimentant la machine électrique, notamment destinés à transformer le courant continu en courants alternatifs ou vice-versa. Ces composants peuvent comprendre des interrupteurs électroniques, tels que par exemple des transistors semi-conducteurs, agencés en circuit électrique pour permettre un passage commandé d'énergie électrique entre la batterie d'alimentation haute tension et la machine électrique. En particulier, les composants sont des puces semi-conductrices nues pour lesquels le corps 100 réalise une encapsulation. En référence à la figure 2, le module électronique de puissance 10 comprend trois bornes électriques externes, formant en particulier trois ports de phase 121, 122, 123 délivrant chacun un courant de phase de commande du moteur.

Chaque connecteur de phase 111, 112, 113 permet de relier électriquement ledit port de phase 121, 122, 123 à une phase de la machine électrique. Pour ce faire, le connecteur de phase 111, 112, 113 est monté sur le port de phase 121, 122, 123 correspondant par l'intermédiaire d'un moyen de fixation. Dans l'exemple illustré à la figure 2, ce moyen de fixation se présente sous la forme d'une vis 130.

Chaque connecteur de phase 111, 112, 113 traverse une ouverture du boitier 5 pour permettre de relier l'onduleur 1 à la machine électrique et notamment permettre la circulation des courants alternatifs entre le module électronique de puissance 10 et la machine électrique.

L'unité électronique de contrôle 20 comprend des composants pour contrôler les composants du module électronique de puissance 10. Plus précisément, l'unité électronique de contrôle 20 commande le module électronique de puissance 10 afin qu'il réalise la fonction de conversion du courant continu reçu de la batterie haute tension, définissant une tension continue entre le connecteur négatif 114 et le connecteur positif 115, en trois courants de phase alternatifs de commande du moteur (ou vice-versa).

A cette fin, l'unité électronique de contrôle 20 se présente sous la forme d'une carte électronique 200 comportant notamment un premier ensemble de pistes électriques (non représenté par souci de clarté), appelé bus continu, et un deuxième ensemble de pistes électriques, appelé bus alternatif (non représenté par souci de clarté). Le bus continu est relié au connecteur négatif 114 et au connecteur positif 115 entre lesquels circule le courant continu délivré par la batterie d'alimentation haute tension. Le bus alternatif est relié aux connecteurs de phase 111, 112, 113 du module électronique de puissance 10.

La carte électronique 200 peut être montée sur une paroi du boitier 5 ou un élément de support (non représenté, qui peut par exemple être une plaque) suspendu dans le logement défini par le boitier 5. En particulier, le module électronique de puissance 10, l'élément de support et l'unité électronique de contrôle 20 peuvent être superposés l'un en vis-à-vis de l'autre dans le logement défini par le boitier 5, l'élément de support se trouvant alors entre le module électronique de puissance 10 et l'unité électronique de contrôle 20. Par exemple, un tel élément de support peut être rapporté dans le boitier 5 et maintenu en place en venant en appui contre des portions de matière dudit boitier 5, notamment des excroissances issues de la surface du boitier 5. Le support peut notamment être maintenu en place en venant en appui au niveau de sa périphérie. Cet élément de support peut par exemple être en métal pour améliorer la dissipation thermique de l'unité électronique de contrôle 20.

La carte électronique 200 de l'unité électronique de contrôle 20 contrôle les composants, notamment les interrupteurs, du module électronique de puissance 10. A cet effet, l'unité électronique de contrôle 20 peut être configurée pour échanger, via les connecteurs de signaux 5-31, 5-32 des signaux de données avec l'extérieur de l'onduleur 1, par exemple avec un contrôleur du véhicule.

Afin de pouvoir mesurer l'intensité ou les variations d'intensité des courants circulant dans les connecteurs de phases 111, 112, 113, l'onduleur 1 comprend au niveau de chaque connecteur de phase 111, 112, 113, une pièce 30 de conduction électrique. Dans cet exemple, en référence notamment à la figure 2, une pièce 30 de conduction électrique est montée entre chaque connecteur de phase 111, 112, 113 et le port de phase 121, 122, 123 correspondant. En variante, la pièce 30 de conduction électrique pourrait être montée entre le connecteur de phase 111, 112, 113 et la tête de la vis 130 correspondante.

L'unité électronique de contrôle 20 comprend un ou plusieurs capteurs de courant (non représentés) permettant, via chaque pièce 30 de conduction électrique, de mesurer l'intensité ou les variations des courants circulant dans les connecteurs de phases 111, 112, 113. De tels capteurs de courant peuvent notamment être montés en surface de la carte électronique 200 de l'unité électronique de contrôle 20. En particulier, l'unité électronique de contrôle 20 peut comprendre un capteur de courant respectif pour deux des connecteurs de phase (par exemple 111 et 112) et pas pour le troisième connecteur de phase (respectivement 113), le courant circulant dans le troisième connecteur de phase 113 pouvant être déduit à partir des courants mesurés sur les deux autres connecteurs de phase 111, 112. Notamment, chaque capteur de courant peut mesurer le courant à partir d'un champ magnétique induit par le passage du courant. Les capteurs de courants sont par exemple des capteurs à effet Hall. Chaque capteur de courant peut comprendre des broches qui sont reçues dans la carte électronique 200 de l'unité électronique de contrôle 20 pour y acheminer la valeur du courant mesuré.

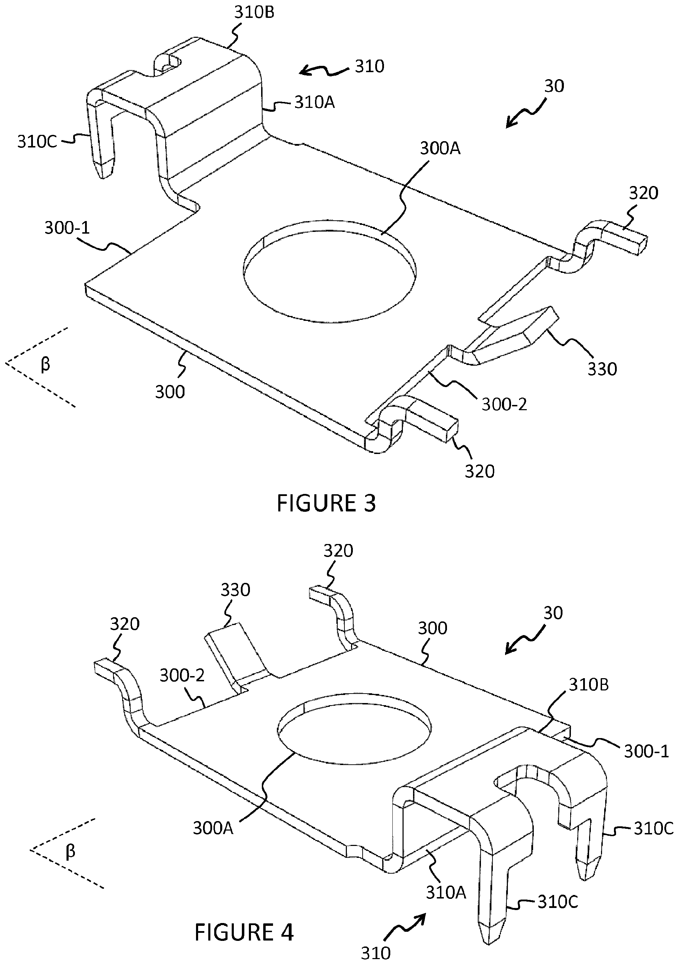

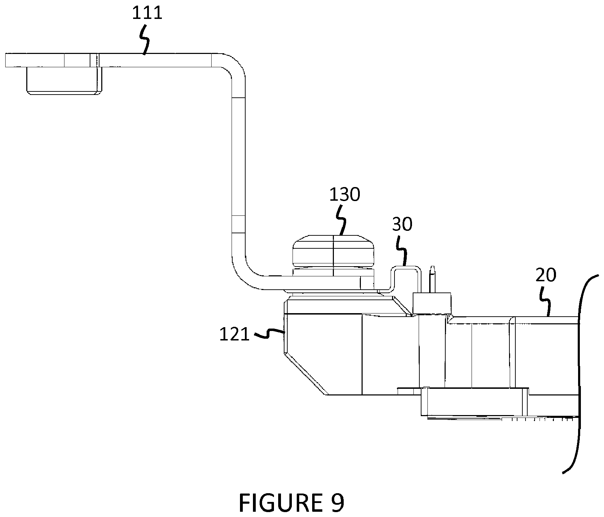

Comme illustré aux figures 3 à 5 et 9, la pièce 30 de conduction électrique comprend une portion plane 300, sensiblement rectangulaire, adaptée pour venir en contact avec une portion plane du connecteur de phase 111, 112, 113 et une portion plane du port de phase 121, 122, 123 correspondant. Ladite portion plane 300 s'étend selon un plan principal β. Comme illustré sur les figures 3 et 4, une ouverture 300A est formée dans cette portion plane 300 afin de recevoir la tige de la vis 130 de fixation du connecteur de phase 111, 112, 113 sur le port de phase 121, 122, 123 correspondant.

Une broche 310 de connexion électrique s'étend depuis un bord 300-1 de la portion plane 300, appelé « bord avant » en référence à la figure 3. Ladite broche 310 comprend une extrémité de liaison 310A reliée à la portion plane 300 au niveau dudit bord 300-1 avant. une portion intermédiaire 310B et deux extrémités libres 310C. On notera que la broche 310 de connexion électrique pourrait comprendre plus ou moins de deux extrémités libres 310C. Dans cet exemple, l'utilisation d'une pluralité d'extrémités libres 310C permet de conférer une fonction d'anti-rotation à la pièce 30 dans le plan principal β lorsqu'elle est montée sur la carte électronique 200.

L'extrémité de liaison 310A s'étend principalement dans un plan orthogonal au plan principal β. La portion intermédiaire 310B s'étend principalement dans un plan parallèle au plan principal β. La portion intermédiaire 310B est en partie courbée afin de relier l'extrémité de liaison 310A et les extrémités libres 310C. Les extrémités libres 310C s'étendent orthogonalement au plan principal β et présente une portion dont la forme est adaptée pour être logée dans un orifice de la carte électronique 200 afin d'y être soudée. Dans cet exemple non limitatif, la forme des extrémités libres 310C est sensiblement pointue.

La forme de la broche 310 de connexion électrique permet de déporter les extrémités libres 310C de la broche 310 depuis la portion plane 300 de manière à ce qu'elles s'étendent à distance de la portion plane 300. En d'autre termes, la portion intermédiaire 310B permet de franchir une distance entre la portion plane 300 et les extrémités libres 310C afin notamment de positionner chacune des extrémités libres 310C au droit de la piste ou de la borne de connexion électrique de la carte électronique 200 au niveau de laquelle elles sont respectivement aptes à être connectées électriquement, par exemple par soudage.

Un tel agencement de la pièce 30 permet notamment d'améliorer l'intégration des composants dans le boitier 5 de l'onduleur 1 et d'assurer à la fois une flexibilité lors du montage de la pièce sur la carte électronique 200 et un bon contact électrique entre les extrémités libres 310C et leur point de connexion électrique sur la carte électronique 200.

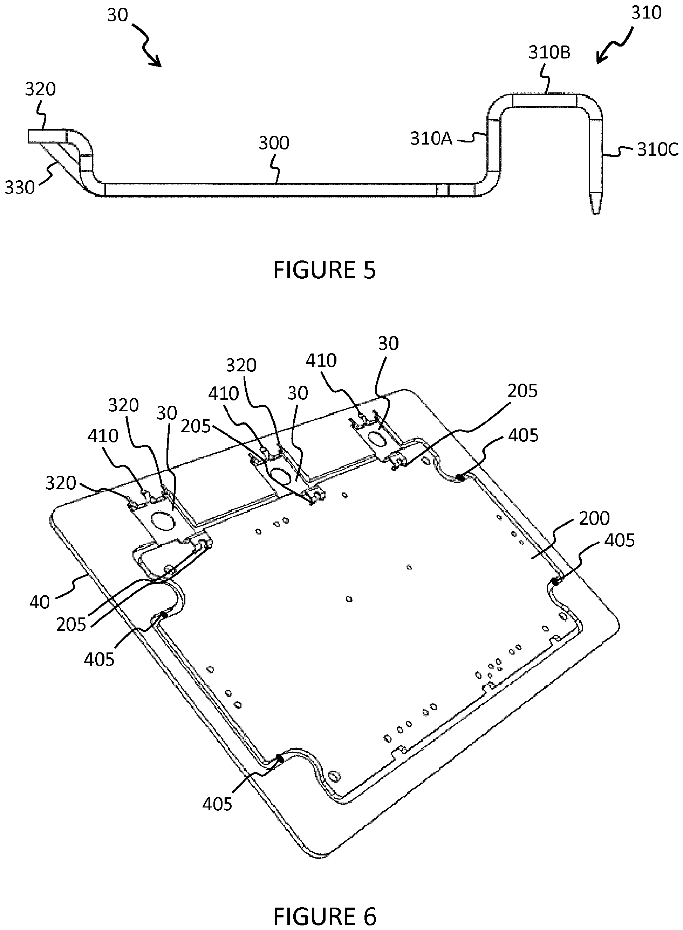

Afin de faciliter son montage sur la carte électronique 200 (comme cela sera décrit ci-après), comme illustré notamment aux figures 3 à 6, la pièce 30 comprend deux pattes de maintien 320 recourbées s'étendant depuis le bord 300-2 arrière, opposé au bord 300-1 avant, et permettant de maintenir la pièce 30 dans sa position de montage sur un support de montage 40 (en référence à la figure 6) de ladite pièce 30 sur l'unité électronique de contrôle 20.

La pièce 30 comprend également un ergot de blocage 330 s'étendant du bord arrière 300-2 de la pièce 30 et permettant de bloquer la pièce 30 sur le support de montage 40 comme cela sera décrit ci-après.

Dans cet exemple préféré, la broche 310 de connexion électrique, les pattes de maintien 320 et l'ergot de blocage 330 sont issus de matière de la portion plane 300, c'est-à-dire que la pièce 30 est réalisée d'un seul tenant. Elles peuvent ainsi avantageusement être formées en les conformant à partir d'un même matériau, notamment d'une seule lame.

Dans cet exemple préféré, la pièce 30 de conduction électrique est métallique et peut par exemple être réalisée en cuivre, en acier, en aluminium ou tout autre matériau conducteur. La pièce 30 de conduction électrique peut avantageusement être recouverte d'une surface anti-usure, par exemple composée d'étain et de nickel.

De manière avantageuse, l'épaisseur de la portion plane 300 est inférieure à 1,5 mm, de préférence de l'ordre de 1 mm, afin de rendre aisée la formation de la broche 310 de connexion électrique, des pattes de maintien 320 et de l'ergot de blocage 330 lors de la fabrication de la pièce 30.

Un exemple de montage de l'onduleur 1 va maintenant être décrit, notamment en référence aux figures 6 à 9.

Tout d'abord, la carte électronique 200 de l'unité électronique de contrôle 20 est formée sur un support de montage 40 rectangulaire de type plaque d'epoxy. Autrement dit, on découpe, par exemple par fraisage, le contour souhaité pour la carte électronique 200, en laissant des attaches 405 afin de maintenir la carte électronique 200 solidaire du support de montage 40. Le support de montage 40 a une forme régulière (dans cet exemple rectangulaire) afin d'être plus facilement manipulable que la carte électronique 200 seule lors de la suite des opérations décrites ci-après. Les pistes de la carte électronique 200 sont créées sur la carte électronique 40 avant ou après sa définition dans le support de montage 40.

Trois pièces 30 de conduction électrique sont alors disposées sur ladite carte électronique 200 de manière à ce que leurs extrémités libres 310C respectives soient insérées dans des orifices 205 adaptés de la carte électronique 200. A cet instant, comme illustré sur la figure 6, les pattes de maintien 320 sont en appui sur le support de montage 40 et l'ergot de blocage 330 est logé dans un espace de blocage 410 correspondant formé dans le support de montage 40.

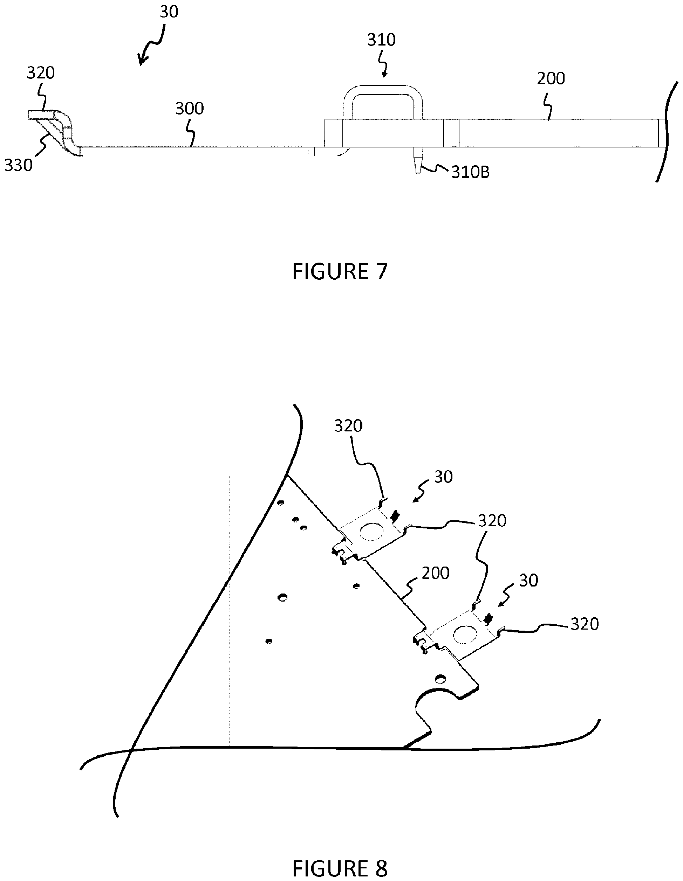

Une pâte de soudage est appliquée au niveau des extrémités libres 310C des broches 310 puis l'ensemble ainsi formé est introduit dans un four. La chaleur dégagée par le four permet de faire fondre la pâte de soudage de manière à souder chaque extrémité libre 310C sur la carte électronique 200, comme illustré sur la figure 7. Les attaches 405 sont ensuite découpées pour libérer la carte électronique 200 du support de montage 40.

La présence de la portion intermédiaire 310B courbée confère une flexibilité à la pièce 30 lorsque de son montage sur la carte électronique 200 puis lorsqu'elle est montée, permettant notamment d'éviter d'endommager la connexion électrique entre la pièce 30 et la carte électronique 200.

L'unité électronique de contrôle 20 est ensuite positionnée sur le module électronique de puissance 10 de sorte que les pièces 30 viennent en appui respectivement sur les ports de phase 121, 122, 123 du module de commande 10.

Les connecteurs de phases 111, 112, 113 sont ensuite positionnés à leur tour sur les pièces 30 puis une vis 130 est insérée à travers chaque connecteur de phase 111, 112, 113 et chaque ouverture 300A de chaque pièce 30.

Les vis 130 sont alors serrées pour solidariser chaque connecteur de phase 111, 112, 113 avec la pièce 30 et le port de phase 121, 122, 123 correspondant.

Chaque vis 130 peut comprendre un filetage qui correspond avec un filetage du port de phase 121, 122, 123 afin de fixer solidement le connecteur de phase 111, 112, 113 sur la pièce 30 et le port de phase 121, 122, 123.

Une rondelle peut être insérée entre la tête de vis 130 et le connecteur de phase 111, 112, 113, entre la tête de vis 130 et la pièce 30, entre le connecteur de phase 111, 112, 113 et la pièce 30 ou entre la pièce 30 et le port de phase 121, 122, 123 selon la configuration utilisée.

La vis 130 contribue au maintien mécanique du connecteur de phase 111, 112, 113 et de la pièce 30 sur le port de phase 121, 122, 123. En outre, le montage de chaque connecteur de phase 111, 112, 113 entre la pièce 30 et la tête de vis 130 correspondantes permet notamment d'éviter des frictions de la vis 130 sur la pièce 30.

On notera que, une fois la vis 130 serrée sur le connecteur de phase 111, 112, 113, les pattes de maintien 320 et l'ergot de blocage 330 peuvent se trouver aplatis entre le connecteur de phase 111, 112, 113 et le port de phase 121, 122, 123.

L'invention ne se limite pas au seul exemple décrit ci-dessus. Les figures représentent un exemple particulier de réalisation qui combine plusieurs modes de réalisation. Cependant, les caractéristiques liées aux modes de réalisation peuvent-être indépendantes entre elles d'un mode à l'autre, ou combinées entre elles, comme cela ressort des revendications.

En particulier, la pièce 30 a été décrite ci-avant dans son utilisation entre un connecteur de phase 111, 112, 113 et un port de phase 121, 122, 123 mais on notera que la pièce 30 pourrait être également utilisée entre le connecteur négatif 114 et une borne négative du module électronique de puissance 10 et/ou entre le connecteur positif 115 et une borne positive du module électronique de puissance 10. De même, l'onduleur 1 a été décrit avec trois connecteurs de phase 111, 112, 113, mais il pourrait comprendre un nombre différent de trois.

## Revendications

1. Pièce (30) de conduction électrique pour un ensemble (1) électrique, ledit ensemble (1) comprenant un module électronique de puissance (10) et une unité électronique de contrôle (20) dudit module électronique de puissance (10), ledit module électronique de puissance (10) comportant au moins une borne électrique externe (121, 122, 123), ladite pièce (30) étant **caractérisée en ce qu'**elle est destinée à relier électriquement ladite au moins une borne électrique externe (121, 122, 123) à l'unité électronique de contrôle (20) et **en ce qu'**elle comprend :
- une portion plane (300) conductrice électriquement, destinée à être connectée électriquement avec la au moins une borne électrique externe (121, 122, 123), et
- au moins une broche (310) de connexion électrique s'étendant depuis un bord (300-1) de la portion plane (300) et comprenant une extrémité de liaison (310A) reliée à la portion plane (300), au moins une portion intermédiaire (310B) et au moins une extrémité libre (310C) reliée à ladite extrémité de liaison (310A) par ladite au moins une portion intermédiaire (310B), ladite au moins une extrémité libre (310C) s'étendant orthogonalement au plan (β) de la portion plane (30) et étant adaptée pour être connectée électriquement à l'unité électronique de contrôle (20).

2. Pièce (30) de conduction électrique selon la revendication 1, dans laquelle la au moins une broche (310) de connexion électrique est issue de matière de la portion plane (300).

3. Pièce (30) de conduction électrique selon l'une des revendications précédentes, dans laquelle la portion plane (300) conductrice électriquement délimite une ouverture (300A) apte à autoriser le passage d'un organe de fixation (130) de la pièce (30) de conduction électrique sur une borne électrique externe (121,122,123) du module électronique de puissance (10).

4. Pièce (30) de conduction électrique selon l'une des revendications précédentes, ladite pièce (30) comprenant en outre des portions de maintien (320) sur un support de montage (40) de ladite pièce (30) sur l'unité électronique de contrôle (20).

5. Pièce (30) de conduction électrique selon la revendication précédente, dans lequel les portions de maintien se présentent sous la forme de deux pattes de maintien (320) recourbées s'étendant depuis le bord (300-2) opposé au bord (300-1) depuis lequel s'étend la broche (310) de connexion électrique.

6. Pièce (30) de conduction électrique selon l'une des revendications précédentes, ladite pièce (30) comprenant en outre au moins une portion de blocage (330) sur un support de montage (40) de ladite pièce (30) sur l'unité électronique de contrôle (20).

7. Pièce (30) de conduction électrique selon la revendication précédente, dans lequel la au moins une portion de blocage se présente sous la forme d'un ergot de blocage (330) s'étendant depuis le bord (300-2) opposé au bord (300-1) depuis lequel s'étend la broche (310) de connexion électrique.

8. Ensemble (1) électrique comprenant un module électronique de puissance (10) et une unité électronique de contrôle (20), ledit module électronique de puissance (10) comportant au moins une borne électrique externe (121,122, 123), l'ensemble (1) électrique étant **caractérisé en ce qu'**il comprend au moins une pièce (30) de conduction électrique, selon l'une des revendications précédentes, fixée sur ladite au moins une borne électrique externe (121, 122, 123) et reliée électriquement à l'unité électronique de contrôle (20).

9. Ensemble (1) selon la revendication précédente, dans lequel la pièce (30) de conduction électrique est montée sur la borne électrique externe (121, 122, 123) par l'intermédiaire d'un organe de fixation (130) traversant une ouverture (300A) formée dans la portion plane (300) de la pièce (30) de conduction électrique de manière à relier électriquement la pièce (30) de conduction électrique et la borne électrique externe (121, 122, 123) du module électronique de puissance (10).

10. Ensemble (1) électrique selon la revendication 8 ou 9, comprenant en outre au moins un connecteur électrique (111, 112, 113) destiné à connecter le module électronique de puissance avec un élément électrique externe, ledit au moins un connecteur électrique (111, 112, 113) étant connecté électriquement à ladite au moins une borne électrique externe (121, 122, 123).

11. Ensemble (1) électrique selon la revendication 10, dans lequel la borne électrique externe (121, 122, 123), la portion plane (300) de la pièce (30) de conduction électrique et le connecteur électrique (111, 112, 113) correspondant sont superposés et en contact.

12. Ensemble (1) électrique selon la revendication 11, dans lequel la portion plane (300) est entre la borne électrique externe (121, 122, 123) et le connecteur électrique (111, 112, 113) correspondant.

13. Procédé de montage d'au moins une pièce (30) de conduction électrique sur une unité électronique de contrôle (20) d'un onduleur (1), ledit procédé comprenant :
- une étape de positionnement d'un support de montage (40) comprenant une unité électronique de contrôle (20),
- une étape de positionnement d'au moins une pièce (30) de conduction électrique selon l'une des revendications 1 à 7 sur le support de montage (40) de sorte que la au moins une extrémité libre (310C) de la broche (310) de connexion électrique soit logée dans au moins un orifice (205) formé dans l'unité électronique de contrôle (20),
- une étape d'application d'un matériau de soudage au niveau du au moins un orifice (205) et de la au moins une extrémité libre (310C) de la broche (310) de connexion électrique,
- une étape de passage dans un four du support de montage (40), sur lequel sont positionnés l'unité électronique de contrôle (20) et la au moins une pièce (30) de conduction électrique de manière à souder ladite au moins pièce (30) de conduction électrique sur l'unité électronique de contrôle (20).

## Patentansprüche

1. Elektrisch leitendes Teil (30) für eine elektrische Anordnung (1), wobei die Anordnung (1) ein elektronisches Leistungsmodul (10) und eine elektronische Steuereinheit (20) des elektronischen Leistungsmoduls (10) umfasst, wobei das elektronische Leistungsmodul (10) mindestens einen externen elektrischen Anschluss (121, 122, 123) umfasst, wobei das Teil (30) **dadurch gekennzeichnet ist, dass** es dazu bestimmt ist, den mindestens einen externen elektrischen Anschluss (121, 122, 123) mit der elektronischen Steuereinheit (20) elektrisch zu verbinden, und dadurch, dass es Folgendes umfasst:
- einen elektrisch leitenden ebenen Abschnitt (300), der dazu bestimmt ist, mit dem mindestens einen externen elektrischen Anschluss (121, 122, 123) elektrisch verbunden zu werden, und
- mindestens einen elektrischen Anschlussstift (310), der sich von einem Rand (300-1) des ebenen Abschnitts (300) erstreckt und ein mit dem ebenen Abschnitt (300) verbundenes Verbindungsende (310A), mindestens einen Zwischenabschnitt (310B) und mindestens ein freies Ende (310C) umfasst, das über den mindestens einen Zwischenabschnitt (310B) mit dem Verbindungsende (310A) verbunden ist, wobei sich das mindestens eine freie Ende (310C) orthogonal zur Ebene (β) des ebenen Abschnitts (30) erstreckt und so beschaffen ist, dass es elektrisch mit der elektronischen Steuereinheit (20) verbunden werden kann.

2. Elektrisch leitendes Teil (30) nach Anspruch 1, wobei der mindestens eine elektrische Anschlussstift (310) aus dem Material des ebenen Abschnitts (300) besteht.

3. Elektrisch leitendes Teil (30) nach einem der vorhergehenden Ansprüche, wobei der elektrisch leitende ebene Abschnitt (300) eine Öffnung (300A) abgrenzt, die geeignet ist, den Durchgang eines Befestigungsorgans (130) des elektrisch leitenden Teils (30) an einem externen elektrischen Anschluss (121, 122, 123) des elektronischen Leistungsmoduls (10) zuzulassen.

4. Elektrisch leitendes Teil (30) nach einem der vorhergehenden Ansprüche, wobei das Teil (30) darüber hinaus Abschnitte zum Halten (320) an einer Montagehalterung (40) des Teils (30) an der elektronischen Steuereinheit (20) umfasst.

5. Elektrisch leitendes Teil (30) nach dem vorhergehenden Anspruch, wobei die Halteabschnitte in Form von zwei gebogenen Haltelaschen (320) vorliegen, die sich von dem Rand (300-2) gegenüber dem Rand (300-1) erstrecken, von dem sich der elektrische Anschlussstift (310) erstreckt.

6. Elektrisch leitendes Teil (30) nach einem der vorhergehenden Ansprüche, wobei das Teil (30) darüber hinaus mindestens einen Abschnitt zum Blockieren (330) an einer Montagehalterung (40) des Teils (30) an der elektronischen Steuereinheit (20) umfasst.

7. Elektrisch leitendes Teil (30) nach dem vorhergehenden Anspruch, wobei der mindestens eine Abschnitt zum Blockieren in Form eines Verriegelungsstifts (330) vorliegt, der sich von dem Rand (300-2) gegenüber dem Rand (300-1) erstreckt, von dem sich der elektrische Anschlussstift (310) erstreckt.

8. Elektrische Anordnung (1), die ein elektronisches Leistungsmodul (10) und eine elektronische Steuereinheit (20) umfasst, wobei das elektronische Leistungsmodul (10) mindestens einen externen elektrischen Anschluss (121, 122, 123) aufweist, wobei die elektrische Anordnung (1) **dadurch gekennzeichnet ist, dass** sie mindestens ein elektrisch leitendes Teil (30) nach einem der vorhergehenden Ansprüche umfasst, das an dem mindestens einen externen elektrischen Anschluss (121, 122, 123) befestigt ist und elektrisch mit der elektronischen Steuereinheit (20) verbunden ist.

9. Anordnung (1) nach dem vorhergehenden Anspruch, wobei das elektrisch leitende Teil (30) an dem externen elektrischen Anschluss (121, 122, 123) über ein Befestigungsorgan (130) angebracht ist, das durch eine Öffnung (300A) hindurchgeht, die in dem ebenen Abschnitt (300) des elektrisch leitenden Teils (30) ausgebildet ist, um das elektrisch leitende Teil (30) und den externen elektrischen Anschluss (121, 122, 123) des elektronischen Leistungsmoduls (10) elektrisch zu verbinden.

10. Elektrische Anordnung (1) nach Anspruch 8 oder 9, die darüber hinaus mindestens einen elektrischen Verbinder (111, 112, 113) zum Verbinden des elektronischen Leistungsmoduls mit einem externen elektrischen Element umfasst, wobei der mindestens eine elektrische Verbinder (111, 112, 113) elektrisch mit dem mindestens einen externen elektrischen Anschluss (121, 122, 123) verbunden ist.

11. Elektrische Anordnung (1) nach Anspruch 10, wobei der externe elektrische Anschluss (121, 122, 123), der ebene Abschnitt (300) des elektrisch leitenden Teils (30) und der entsprechende elektrische Verbinder (111, 112, 113) übereinander liegen und sich berühren.

12. Elektrische Anordnung (1) nach Anspruch 11, wobei sich der ebene Abschnitt (300) zwischen dem externen elektrischen Anschluss (121, 122, 123) und dem entsprechenden elektrischen Verbinder (111, 112, 113) befindet.

13. Verfahren zur Montage mindestens eines elektrisch leitenden Teils (30) an einer elektronischen Steuereinheit (20) eines Wechselrichters (1), wobei das Verfahren Folgendes umfasst:
- einen Schritt des Positionierens einer Montagehalterung (40), der eine elektronische Steuereinheit (20) enthält,
- einen Schritt des Positionierens mindestens eines elektrisch leitenden Teils (30) nach einem der Ansprüche 1 bis 7 auf der Montagehalterung (40), so dass das mindestens eine freie Ende (310C) des elektrischen Anschlussstifts (310) in mindestens einer Öffnung (205) aufgenommen wird, die in der elektronischen Steuereinheit (20) ausgebildet ist,
- einen Schritt des Aufbringens eines Lötmaterials an der mindestens einen Öffnung (205) und dem mindestens einen freien Ende (310C) des elektrischen Anschlussstifts (310),
- einen Schritt des Überführens der Montagehalterung (40), auf der die elektronische Steuereinheit (20) und das mindestens eine elektrisch leitende Teil (30) positioniert sind, in einen Ofen, um das mindestens eine elektrisch leitende Teil (30) an die elektronische Steuereinheit (20) zu löten.

## Claims

1. Electrical conducting part (30) for an electrical assembly (1), said assembly (1) comprising an electronic power module (10) and an electronic control unit (20) for controlling said electronic power module (10), said electronic power module (10) comprising at least one external electrical terminal (121, 122, 123), said part (30) being **characterized in that** it is intended to electrically connect said at least one external electrical terminal (121, 122, 123) to the electronic control unit (20) and **in that** it comprises:
- an electrically conductive planar segment (300) intended to be electrically connected with the at least one external electrical terminal (121, 122, 123), and
- at least one electrical connection pin (310) extending from an edge (300-1) of the planar segment (300) and comprising a linking end (310A) connected to the planar segment (300), at least one intermediate segment (310B) and at least one free end (310C) connected to said linking end (310A) by said at least one intermediate segment (310B), said at least one free end (310C) extending orthogonally to the plane (β) of the planar segment (30) and being suitable for being electrically connected to the electronic control unit (20).

2. Electrical conducting part (30) according to Claim 1, wherein the at least one electrical connection pin (310) is made of the same material as, and is integrally formed with, the planar segment (300).

3. Electrical conducting part (30) according to either of the preceding claims, wherein the electrically conductive planar segment (300) delineates an aperture (300A) able to permit passage of a member (130) for fastening the electrical conducting part (30) to an external electrical terminal (121, 122, 123) of the electronic power module (10).

4. Electrical conducting part (30) according to one of the preceding claims, said part (30) further comprising retaining segments (320) for keeping it on a carrier (40) for mounting said part (30) on the electronic control unit (20).

5. Electrical conducting part (30) according to the preceding claim, wherein the retaining segments take the form of two curved retaining tabs (320) extending from the edge (300-2) opposite the edge (300-1) from which the electrical connection pin (310) extends.

6. Electrical conducting part (30) according to one of the preceding claims, said part (30) further comprising at least one segment (330) for blocking it on a carrier (40) for mounting said part (30) on the electronic control unit (20).

7. Electrical conducting part (30) according to the preceding claim, wherein the at least one blocking segment takes the form of a blocking pin (330) extending from the edge (300-2) opposite the edge (300-1) from which the electrical connection pin (310) extends.

8. Electrical assembly (1) comprising an electronic power module (10) and an electronic control unit (20), said electronic power module (10) comprising at least one external electrical terminal (121, 122, 123), the electrical assembly (1) being **characterized in that** it comprises at least one electrical conducting part (30), according to one of the preceding claims, fastened to said at least one external electrical terminal (121, 122, 123) and electrically connected to the electronic control unit (20).

9. Assembly (1) according to the preceding claim, wherein the electrical conducting part (30) is mounted on the external electrical terminal (121, 122, 123) by way of a fastening member (130) passing through an aperture (300A) formed in the planar segment (300) of the electrical conducting part (30) so as to electrically connect the electrical conducting part (30) and the external electric terminal (121, 122, 123) of the power electronic module (10).

10. Electrical assembly (1) according to Claim 8 or 9, further comprising at least one electrical connector (111, 112, 113) intended to connect the electronic power module with an external electrical element, said at least one electrical connector (111, 112, 113) being electrically connected to said at least one external electrical terminal (121, 122, 123).

11. Electrical assembly (1) according to Claim 10, wherein the external electrical terminal (121, 122, 123), the planar segment (300) of the electrical conducting part (30) and the corresponding electrical connector (111, 112, 113) are superposed and in contact.

12. Electrical assembly (1) according to Claim 11, wherein the planar segment (300) is between the external electrical terminal (121, 122, 123) and the corresponding electrical connector (111, 112, 113).

13. Method for mounting at least one electrical conducting part (30) on an electronic control unit (20) of an inverter (1), said method comprising:
- a step of positioning a mounting carrier (40) comprising an electronic control unit (20),
- a step of positioning at least one electrical conducting part (30) according to one of Claims 1 to 7 on the mounting carrier (40) so that the at least one free end (310C) of the electrical connection pin (310) is housed in at least one orifice (205) formed in the electronic control unit (20),
- a step of applying a solder material to the at least one orifice (205) and to the at least one free end (310C) of the electrical connection pin (310),
- a step of baking the mounting carrier (40), on which are positioned the electronic control unit (20) and the at least one electrical conducting part (30) so as to solder the at least one electrical conducting part (30) to the electronic control unit (20).
